# FASCICULE DE BREVET EUROPEEN

(11) **EP 3 148 659 B1**
(45) Date de publication et mention de la délivrance du brevet: **17.02.2021**
(21) Numéro de dépôt: 15753706.9
(22) Date de dépôt: 29.05.2015
(51) Int. Cl.: A63H 33/10, F16B 2/22

(54) **JEU DE CONSTRUCTION PAR ASSEMBLAGE DE BOUCHONS RÉALISÉ PAR AU MOINS UN DISPOSITIF D'ASSEMBLAGE**
KONSTRUKTIONSSPIEL DURCH KAPPENMONTAGE MITTELS KAPPENMONTAGEVORRICHTUNG
CONSTRUCTIONAL GAME BY CAP ASSEMBLY USING AT LEAST ONE ASSEMBLY DEVICE

(30) Priorité: 29.05.2014 FR 1401242; 21.04.2015 FR 1553556
(43) Date de publication de la demande: 05.04.2017
(73) Titulaire: WASTE IS MORE, 34470 Perols (FR)
(72) Inventeur: RHEIMS, Cyril, 34470 Perols (FR); COLLOS, Mathieu, 34830 Clapiers (FR)
(74) Mandataire: Rhein, Alain
(86) Numéro de dépôt international: PCT/FR2015/000105
(87) Numéro de publication internationale: WO 2015/181455

(56) Documents cités:
- EP-A2- 2 412 987
- DE-A1-102012 110 703
- FR-A- 1 183 468
- FR-A- 1 604 334
- GB-A- 439 863
- US-A1- 2004 221 384
- US-A1- 2013 095 722

## Description

La présente invention concerne un jeu de construction avec un dispositif d'assemblage de bouchons, notamment de bouchons en plastique, tels que ceux utilisés pour fermer des bouteilles utilisées pour contenir des liquides alimentaires ou ménagers, par exemple des bouteilles d'eau ou de lait.

La présente invention vise à permettre la réutilisation de bouchons lors de jeux en réalisant des structures complexes en deux ou trois dimensions, notamment de constructions, de décorations ou encore d'œuvres d'art.

Les documents GB 439 863, FR 1 604 334, EP 2 412 987, US 2004/221384, FR 1 183 468, DE 10 2012 110703 et US 2013/095722 décrivent plusieurs types de dispositifs d'assemblage pour des jeu de construction.

La présente invention concerne un jeu de construction de structures complexes à deux ou trois dimensions par assemblage de bouchons pour fermer des bouteilles utilisées pour contenir des liquides alimentaires ou ménagers, un bouchon comportant une paroi cylindrique qui présente un filetage réalisé sur une face intérieure de la paroi cylindrique.

L'invention se caractérise en ce que, l'assemblage de bouchons est réalisé par au moins un dispositif d'assemblage comprenant une pince d'assemblage en forme de U qui présente deux branches latérales élastiquement flexibles de façon à former une mâchoire configurée pour assembler deux bouchons par leurs parois cylindriques, chaque branche latérale comporte une face intérieure délimitant la mâchoire, chaque face intérieure étant équipée d'un crantage (13) interne à plusieurs crans, le crantage est adapté à coopérer avec le filetage formé sur la paroi cylindrique d'un bouchon.

Selon un premier mode de réalisation, la pince d'assemblage comporte une base qui relie les deux branches latérales, la distance comprise entre les deux branches latérales diminuant progressivement depuis la base vers une extrémité libre de chaque branche latérale, de sorte que la mâchoire présente une section sensiblement en forme de triangle.

Selon un deuxième mode de réalisation, le dispositif d'assemblage comprend des moyens de préhension permettant de faciliter la manipulation de la pince d'assemblage. Plus précisément, les moyens de préhension sont disposés sur une face extérieure d'une base de la pince d'assemblage.

Selon une première variante du deuxième mode de réalisation, les moyens de préhension sont formés par des picots.

Selon une seconde variante du deuxième mode de réalisation, les moyens de préhension sont formés par un ergot.

Selon un troisième mode de réalisation, le dispositif d'assemblage est constitué d'une unique pince d'assemblage.

Selon un quatrième mode de réalisation alternatif au troisième mode de réalisation, le dispositif d'assemblage comprend deux pinces d'assemblage reliées par une languette de liaison. Ce dispositif permet d'assembler quatre bouchons. Avantageusement, le dispositif d'assemblage du quatrième mode de réalisation est formé par deux pinces d'assemblage et par la languette de liaison.

Un dispositif d'assemblage du quatrième mode de réalisation peut présenter des caractéristiques particulières.

Ainsi d'une part, la languette de liaison peut être rigide (ce qui permet d'avoir un dispositif d'assemblage rigide) ou flexible (ce qui permet d'avoir un dispositif d'assemblage flexible).

D'autre part, le choix de la position des points de liaison de la languette de liaison sur les deux pinces d'assemblage permet de donner au dispositif d'assemblage différentes conformations.

Ainsi, pour chaque pince d'assemblage comprenant une base qui relie les deux branches latérales, la languette de liaison relie les deux pinces d'assemblage soit par leurs bases, soit par leurs branches latérales, soit par la base d'une pince d'assemblage et la branche latérale de l'autre pince d'assemblage.

Egalement, pour chaque pince d'assemblage comprenant une face intérieure qui délimite la mâchoire, une face extérieure qui est opposée à la face intérieure, et deux faces de liaison qui sont opposées l'une à l'autre et qui relient la face extérieure à la face intérieure, la languette de liaison relie les deux pinces d'assemblage soit par leurs faces de liaison, soit par leurs faces extérieures, soit par la face de liaison d'une pince d'assemblage et la face extérieure d'une autre pince d'assemblage.

Selon un cinquième mode de réalisation, le dispositif d'assemblage comprend un aimant.

Selon un sixième mode de réalisation, un biseau partiel est réalisé sur la face interne de l'extrémité libre de chaque branche latérale pour faciliter l'assemblage des bouchons .

D'autres particularités et avantages de la présente invention apparaîtront dans la description détaillée de neuf modes de réalisation de l'invention donnés à titre d'exemples non limitatifs et illustrés dans les dessins mis en annexes dans lesquels :
- La figure 1 représente en perspective un dispositif d'assemblage conforme à un premier mode de réalisation ;
- La figure 2 représente une vue en plan latéral d'un dispositif d'assemblage de la figure 1;
- La figure 3 représente en coupe latérale le dispositif d'assemblage des figures 1 et 2 reliant deux bouchons par leur paroi cylindrique ;
- La figure 4 représente en perspective un dispositif d'assemblage conforme à un deuxième mode de réalisation ;
- La figure 5 représente en perspective un dispositif d'assemblage conforme à un troisième mode de réalisation ;
- La figure 6 représente en perspective un dispositif d'assemblage conforme à un quatrième mode de réalisation ;
- La figure 7 représente en perspective un dispositif d'assemblage conforme à un cinquième mode de réalisation ;
- La figure 8A représente une vue en plan latéral d'un dipositif d'assemblage conforme à sixième mode de réalisation ;
- La figure 8B représente une vue en plan latéral d'un dispositif d'assemblage conforme à un septième mode de réalisation ;
- La figure 9A représente une vue en perspective du dispositif d'assemblage de la figure 8A ;
- La figure 9B représente une vue en perspective du dispositif de la figure 8B ;
- La figure 10 représente une vue en perspective d'un dispositif d'assemblage conforme à un huitième mode de réalisation ;et
- La figure 11 représente une vue en perspective d'un dispositif conforme à un neuvième mode de réalisation.

L'invention concerne un jeu de construction avec un dispositif d'assemblage 1 adapté à assembler des bouchons 2, notamment des bouchons en plastique. Ces bouchons 2 comprennent une paroi de fond 3 et une paroi cylindrique 4 qui présente un filetage 5 réalisé sur la face intérieure 6 de la paroi cylindrique 4.

Selon l'invention, le dispositif d'assemblage 1 comprend une pince d'assemblage 7 en forme de U.

La pince d'assemblage 7 comprend deux branches latérales 8 et une base 9 qui relie les deux branches latérales 8. Chaque branche latérale 8 s'étend en longueur depuis la base 9, et la base 9 s'étend en longueur d'une branche latérale 8 à l'autre.

Les deux branches latérales 8 sont élastiquement flexibles de façon à former une mâchoire permettant l'assemblage de deux bouchons 2 par leurs parois cylindriques 4 selon un plan d'assemblage correspondant à un plan tangent qui est situé à la jonction des parois cylindriques 4 des deux bouchons 2.

La pince d'assemblage 7 comprend une face intérieure 10 délimitant la mâchoire, une face extérieure 11 opposée à la face intérieure 10, et deux faces de liaison 12 qui sont opposées l'une à l'autre et qui relient la face extérieure 11 à la face intérieure 10. La distance séparant les deux faces de liaison 12 définit la hauteur de chaque branche latérale 8 et de la base 9.

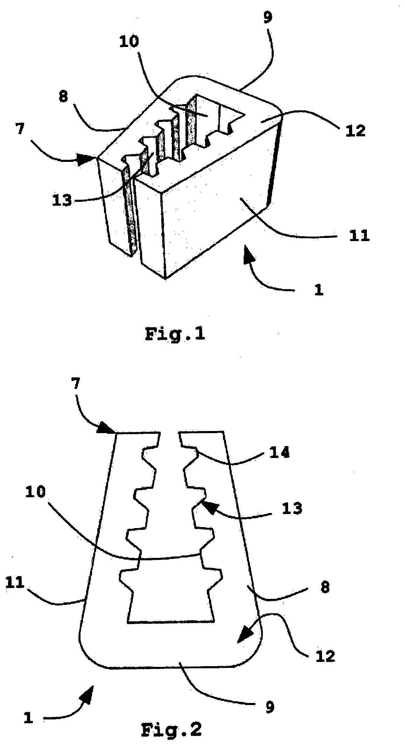

Dans l'exemple illustré aux figures 1 et 2, la face extérieure 11 de chaque branche latérale 8 a une longueur d'environ 10 mm et une hauteur d'environ 7 mm, la face extérieure 11 de la base 9 a une longueur d'environ 8 mm et une hauteur d'environ 7 mm. La distance séparant la face intérieure 10 de la face extérieure 11 des branches latérales 8 et de la base 9 est d'environ 2 mm.

Un bouchon 2 peut être relié à plusieurs dispositifs d'assemblage 1 de façon à pouvoir former une structure complexe. Afin d'assembler fermement les bouchons 2, la face intérieure 10 de chaque branche latérale 8 comprend un crantage 13 adapté à coopérer avec le filetage 5 d'un bouchon 2.

Dans l'exemple illustré aux figures 1 et 2, le crantage 13 présente un fond 14 qui est séparé de la face extérieure 11 d'environ 1,2 mm.

Selon un premier mode réalisation et comme illustré aux figures 1 à 3, le dispositif d'assemblage 1 est constitué d'une unique pince d'assemblage 7.

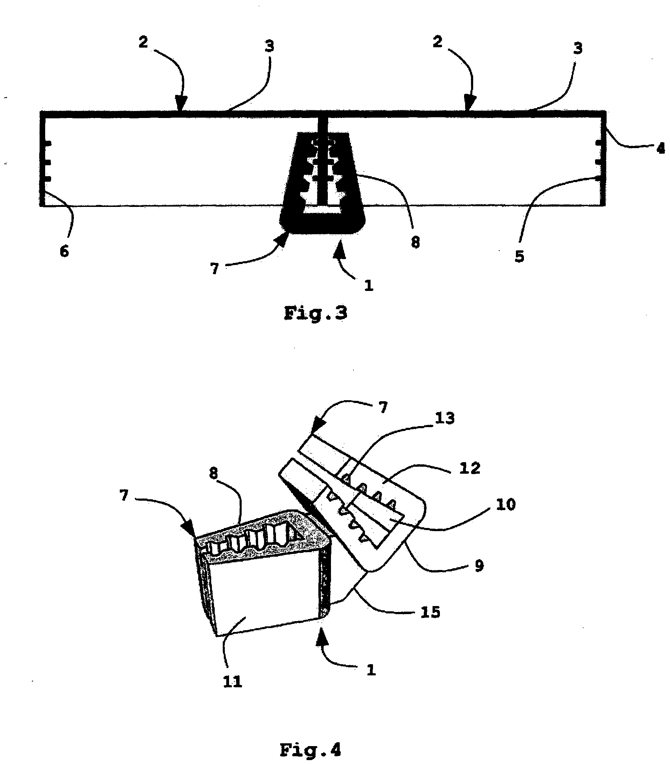

Selon un second mode de réalisation et comme illustré aux figures 4 à 6, le dispositif d'assemblage 1 comprend deux pinces d'assemblage 7 reliées par une languette de liaison 15. Les pinces d'assemblage 7 du dispositif d'assemblage 1 peuvent être identiques ou non.

Comme illustré aux figures 4 à 6, le dispositif d'assemblage 1 est formé par deux pinces d'assemblage 7 et la languette de liaison 15.

La languette de liaison 15 peut relier les deux pinces d'assemblage 7 soit par leurs bases 9, soit par leurs branches latérales 8, soit par la base 9 d'une pince d'assemblage 7 et une branche latérale d'une autre pince d'assemblages 7.

Pour chacune de ces trois types de liaison, la languette de liaison 15 peut relier les deux pinces d'assemblage 7 soit par leurs faces de liaison 12, soit par leurs faces extérieures 11, soit par la face de liaison 12 d'une pince d'assemblage 7 et la face extérieure 11 d'une autre pince d'assemblage 7.

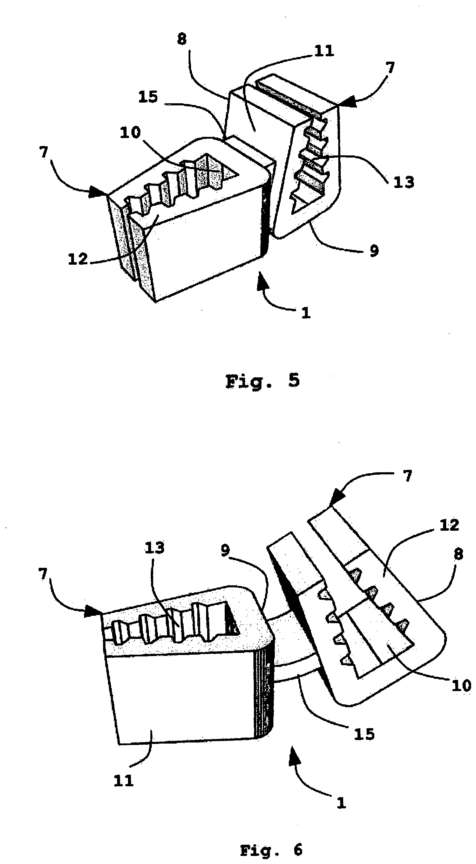

La languette de liaison 15 peut être rigide comme illustré aux figures 4 et 5, ou flexible comme illustré à la figure 6.

Du fait de la languette de liaison 15, le dispositif d'assemblage 1 peut prendre plusieurs conformations, notamment selon la forme de la languette de liaison 15 et/ou la position de ses points de liaison avec les pinces d'assemblage 7.

Ainsi les figures 4 à 6 illustrent trois modes de réalisation différents dans lesquels la languette de liaison 15 relie la face extérieure 11 de la base 9 d'une pince d'assemblage 7 à la face extérieure 11 d'une branche latérale 8 d'une autre pince d'assemblage 7.

Dans ces trois modes de réalisation, les deux plans d'assemblage des deux pinces d'assemblage 7 sont perpendiculaires. Dans les deux modes de réalisation illustrés aux figures 4 et 5, la languette de liaison 15 est rigide de façon à définir un angle fixe entre les faces extérieures 11 des deux bases 9 (l'angle est de 45° à la figure 4 et de 90° à la figure 5). Dans le mode de réalisation illustré à la figure 6, la languette de liaison 15 est flexible ce qui permet de faire varier l'angle entre les faces extérieures 11 des deux bases 9.

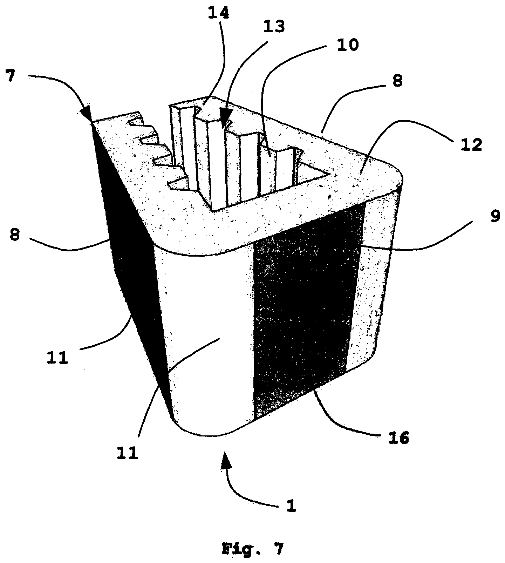

Dans le mode de réalisation de la figure 7, le dispositif d'assemblage 1 comprend un aimant 16 permettant de fixer le dispositif d'assemblage 1 et les éventuels bouchons 2 auquel il est assemblé sur une surface métallique telle qu'une porte de réfrigirateur. Avantageusement, dans le cas d'un dispositif d'assemblage 1 constitué d'une unique pince d'assemblage 7, l'aimant 16 est disposé sur la face extérieure 11 de la base 9 de la pince d'assemblage 7.

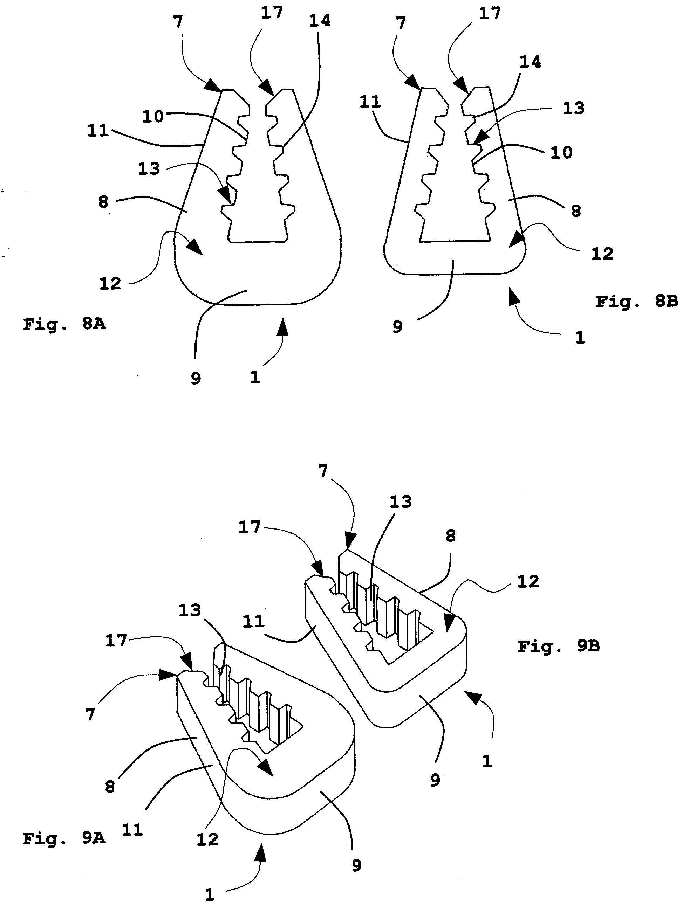

Avantageusement, les figures 8A à 11 illustrent un dispositif d'assemblage 1 comprenant une pince d'assemblage 7 qui comprend un biseau partiel 17 réalisé sur la face interne 10 de l'extrémité libre de chaque branche latérale 8. Le biseau partiel 17 permet de faciliter l'assemblage et le désassemblage des bouchons 2.

De plus, les modes de réalisation des figures 8A, 9A, 10 et 11 illustrent un dispostif d'assemblage 1 adapté à être manipulé par des enfants et notamment des enfants de moins de six ans. Dans le mode de réalisation des figures 8A et 9A, le dispositif d'assemblage 1 comprend une pince d'assemblage 7 dont les dimensions internes de la mâchoire sont inchangées par rapport au mode de réalisation des figures 8B et 9B, mais présente des des dimensions extérieures plus volumineuses permettant de faciliter la préhension de la pince d'assemblage 7.

Ainsi dans le mode de réalisation des figures 8A et 9A, chaque branche latérale 8 a une longueur d'environ 13 mm et une hauteur d'environ 7 mm, la face extérieure 11 de la base 9 a une longueur d'environ 10 mm et une hauteur d'environ 7 mm. La distance séparant la face intérieure 10 de la face extérieure 11 des branches latérales 8 et de la base 9 est d'environ 4 mm.

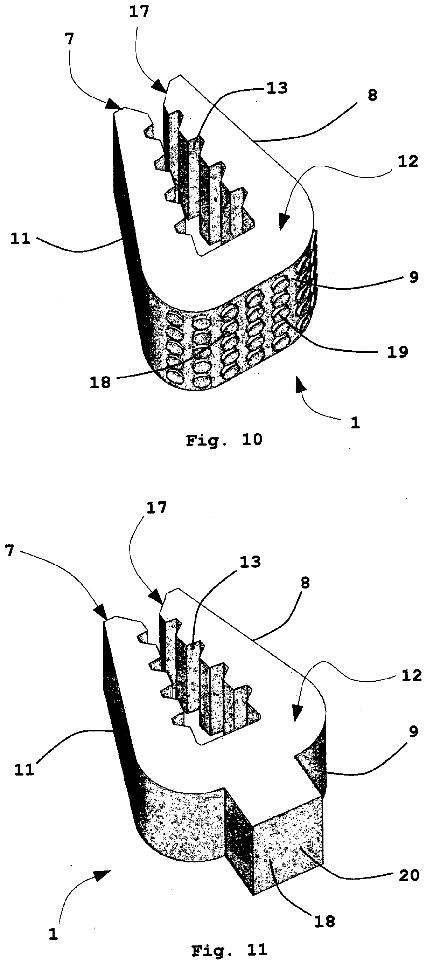

Dans les modes de réalisation des figures 10 et 11, en plus de présenter des dimensions extérieures plus volumineuses que le dispositif d'assemblage 1 illustré aux figures 8B et 9B, le dispositif d'assemblage 1 comprend une pince d'assemblage 7 qui comprend des moyens de préhension 18 facilitant la manipulation du dispositif d'assemblage 1.

Dans le mode de réalisation illustré à la figure 10, les moyens de préhension 18 sont formés par des picots 19 disposés sur la face extérieure 11 de la base 9. De plus dans ce mode de réalisation, la pince d'assemblage 7 présente également des dimensions extérieures plus volumineuses par rapport à celles de la pince d'assemblage 7 illustrée aux figures 8B et 9B. Ainsi, chaque branche latérale 8 a une longueur d'environ 12 mm et une hauteur d'environ 7 mm, la face extérieure de la base 9 a une longueur d'environ 11 mm et une hauteur d'environ 7 mm. La distance séparant la face intérieure 10 de la face extérieure 11 des branches latérales 8 et de la base 9 est d'environ 4 mm.

Dans le mode de réalisation illustré à la figure 11, les moyens de préhension 18 sont formés par un ergot 20 d'environ 4 mm de long qui est disposé sur la face extérieure 11 de la base 9. Dans ce mode de réalisation la pince d'assemblage 7 présente également des dimensions extérieures plus volumineuses par rapport à celles de la pince d'assemblage 7 illustrée aux figures 8B et 9B. Ainsi, chaque branche latérale 8 a une longueur d'environ 12 mm et une hauteur d'environ 7 mm, la face extérieure de la base 9 a une longueur d'environ 11 mm et une hauteur d'environ 7 mm. La distance séparant la face intérieure 10 de la face extérieure 11 des branches latérales 8 et de la base 9 est d'environ 4 mm.

Le dispositif d'assemblage 1 pourrait comprendre trois pinces d'assemblage 7, ou plus, et de multiples languettes de liaison 15.

L'aimant 16 pourrait être disposé sur toute face d'un dispositif d'assemblage 1, aussi bien sur une face d'une pince d'assemblage 7 que sur une face d'une languette de liaison 15.

Les moyens de préhension 18 pourraient être disposés sur toute face d'un dispositif d'assemblage 1, aussi bien sur une face d'une pince d'assemblage 7 que sur une face de la languette de liaison 15.

Ainsi les picots 19 pourraient être disposés sur les faces extérieures 11 de la base 9, de chaque branche latérale 8 et de chaque face de liaison 12 d'une pince d'assemblage 7 ou encore, sur une face de la languette de liaison 15.

De la même façon, l'ergot 20 pourrait être disposé sur les faces extérieures 11 de la base 9, de chaque branche latérale 8 et de chaque face de liaison 12 d'une pince d'assemblage 7 ou encore, sur une face de la languette de liaison 15.

Par ailleurs, plusieurs ergots 20 pourraient être disposés sur un dispositif d'assemblage 1 et notamment sur une pince d'assemblage 7.

## Revendications

1. Jeu de construction de structures complexes à deux ou trois dimensions par assemblage de bouchons (2) pour fermer des bouteilles utilisées pour contenir des liquides alimentaires ou ménagers, un tel bouchon (2) comportant une paroi cylindrique (4) qui présente un filetage (5) réalisé sur une face intérieure (6) de la paroi cylindrique (4), **caractérisé en ce que**, l'assemblage de bouchons (2) est réalisé par au moins un dispositif d'assemblage (1) comprenant une pince d'assemblage (7) en forme de U qui présente deux branches latérales (8) élastiquement flexibles de façon à former une mâchoire configurée pour assembler deux bouchons (2) par leurs parois cylindriques (4), chaque branche latérale (8) comporte une face intérieure (10) délimitant la mâchoire, chaque face intérieure (10) étant équipée d'un crantage (13) interne à plusieurs crans, le crantage (13) est adapté à coopérer avec le filetage (5) formé sur la paroi cylindrique (4) d'un bouchon (2).

2. Jeu de construction selon la revendication 1, la pince d'assemblage (7) comporte une base (9) qui relie les deux branches latérales (8), la distance comprise entre les deux branches latérales (8) diminuant progressivement depuis la base (9) vers une extrémité libre de chaque branche latérale (8), de sorte que la mâchoire présente une section sensiblement en forme de triangle.

3. Jeu de construction selon l'une des revendications 1 et 2, le dispositif d'assemblage (1) comprenant des moyens de préhension (18) permettant de faciliter la manipulation de la pince d'assemblage (7).

4. Jeu de construction selon la revendication 3, les moyens de préhension (18) étant disposés sur une face extérieure (11) d'une base (9) de la pince d'assemblage (7).

5. Jeu de construction selon l'une des revendications 3 et 4, les moyens de préhension (18) étant formés par des picots (19).

6. Jeu de construction selon l'une des revendications 3 et 4, les moyens de préhension (18) étant formés par un ergot (19).

7. Jeu de construction selon l'une des revendications 1 à 6, le dispositif d'assemblage (1) étant constitué d'une unique pince d'assemblage (7).

8. Jeu de construction selon l'une des revendications 1 à 6 le dispositif d'assemblage (1) comprenant deux pinces d'assemblage (7) reliées par une languette de liaison (15).

9. Jeu de construction selon la revendication 8, le dispositif d'assemblage (1) étant formé par les deux pinces d'assemblage (7) et par la languette de liaison (15).

10. Jeu de construction selon l'une des revendications 8 et 9, chaque pince d'assemblage (7) comprenant une base (9) qui relie les deux branches latérales (8), la languette de liaison (15) relie les deux pinces d'assemblage (7) soit par leurs bases (9), soit par leurs branches latérales (8), soit par la base (9) d'une pince d'assemblage (7) et la branche latérale (8) d'une autre pince d'assemblage (7).

11. Jeu de construction selon l'une des revendications 1 à 10, le dispositif d'assemblage (1) comprenant un aimant (16).

12. Jeu de construction selon l'une des revendications 1 à 11, un biseau partiel (17) étant réalisé sur la face interne 10 de l'extrémité libre de chaque branche latérale (8) pour faciliter l'assemblage des bouchons (2).

## Patentansprüche

1. Satz zum Zusammensetzen komplexer zwei- oder dreidimensionaler Strukturen durch Verbinden von Stopfen (2) zum Verschließen von Flaschen, die zur Aufnahme von Lebensmitteln oder Haushaltsflüssigkeiten verwendet werden, wobei ein solcher Stopfen (2) eine zylindrische Wand (4) umfasst, die ein Gewinde (5) aufweist, das auf einer Innenfläche (5) der zylindrischen Wand (4) hergestellt ist, **dadurch gekennzeichnet, dass**, die Verbindung von Stopfen (2) durch mindestens eine Verbindungsvorrichtung (1) hergestellt wird, die eine U-förmige Verbindungsklammer (7) enthält, die zwei elastisch biegsame Seitenschenkel (8) aufweist, um eine Backe auszubilden, die so konfiguriert ist, dass sie zwei Stopfen (2) durch ihre zylindrischen Wände (4) verbindet, jeder Seitenschenkel (8) eine die Backe begrenzende Innenfläche (10) umfasst, wobei jede Innenfläche (10) eine innere Einkerbung (13) mit mehreren Kerben umfasst, wobei die Einkerbung (13) geeignet ist, mit dem an der zylindrischen Wand (4) eines Stopfens (2) ausgebildeten Gewinde (5) zusammenzuwirken.

2. Satz zum Zusammensetzen nach Anspruch 1, wobei die Verbindungsklammer (7) eine Grundfläche (9) umfasst, die die beiden Seitenschenkel (8) zusammenfügt, wobei der Abstand zwischen den beiden Seitenschenkeln (8) von der Grundfläche (9) zu einem freien Ende jedes Seitenschenkels (8) allmählich abnimmt, so dass die Backe einen im Wesentlichen dreieckigen Querschnitt aufweist.

3. Satz zum Zusammensetzen nach einem der Ansprüche 1 und 2, wobei die Verbindungsvorrichtung (1) Greifmittel (18) zur Erleichterung der Handhabung der Verbindungsklammer (7) enthält.

4. Satz zum Zusammensetzen nach Anspruch 3, wobei die Greifmittel (18) auf einer Außenseite (11) einer Grundfläche (9) der Verbindungsklammer (7) angeordnet ist.

5. Satz zum Zusammensetzen nach einem der Ansprüche 3 und 4, wobei die Greifmittel (18) durch Zähne (19) ausgebildet sind.

6. Satz zum Zusammensetzen nach einem der Ansprüche 3 und 4, wobei die Greifmittel (18) durch einen Noppen (19) ausgebildet sind.

7. Satz zum Zusammensetzen nach einem der Ansprüche 1 bis 6, wobei die Verbindungsvorrichtung (1) aus einer einzigen Verbindungsklammer (7) besteht.

8. Satz zum Zusammensetzen nach einem der Ansprüche 1 bis 6, wobei die Verbindungsvorrichtung (1) zwei durch eine Bindungszunge (15) zusammengefügte Verbindungsklammern (7) enthält.

9. Satz zum Zusammensetzen nach Anspruch 8, wobei die Verbindungsvorrichtung (1) durch die beiden Verbindungsklammern (7) und die Bindungszunge (15) ausgebildet ist.

10. Satz zum Zusammensetzen nach einem der Ansprüche 8 und 9, wobei jede Verbindungsklammer (7) eine Grundfläche (9) enthält, die die beiden Seitenschenkel (8) zusammenfügt, wobei die Bindungszunge (15) die beiden Verbindungsklammern (7) entweder über ihre Grundfläche (9) oder über ihre Seitenschenkel (8) oder über die Grundfläche (9) einer Verbindungsklammer (7) und den Seitenschenkel (8) der anderen Verbindungsklammer (7) zusammenfügt.

11. Satz zum Zusammensetzen nach einem der Ansprüche 1 bis 10, wobei die Verbindungsvorrichtung (1) einen Magneten (16) enthält.

12. Satz zum Zusammensetzen nach einem der Ansprüche 1 bis 11, wobei an der Innenfläche 10 des freien Endes jedes Seitenschenkels (8) eine Teilschräge (17) hergestellt ist, um das Verbinden der Stopfen (2) zu erleichtern.

## Claims

1. Toy for the construction of complex two- or three-dimensional structures by joining caps (2) for closing bottles used to contain liquid food or household liquids, such a cap (2) comprising a cylindrical wall (4) which has a thread (5) produced on an inner face (5) of the cylindrical wall (4), **characterized in that** caps (2) are joined by at least one joining device (1) comprising a U-shaped joining clamp (7) which has two resiliently flexible side arms (8) so as to form a jaw configured to join two caps (2) by the cylindrical walls (4) thereof, each side arm (8) having an inner face (10) delimiting the jaw, each inner face (10) being provided with internal notching (13) comprising several notches, the notching (13) being suitable for engaging with the thread (5) formed on the cylindrical wall (4) of a cap (2).

2. Construction toy according to claim 1, the joining clamp (7) comprising a base (9) which connects the two side arms (8), the distance between the two side arms (8) gradually decreasing from the base (9) toward a free end of each side arm (8), such that the jaw has a cross section substantially in the shape of a triangle.

3. Construction toy according to either claim 1 or claim 2, the joining device (1) comprising gripping means (18) which facilitate the handling of the joining clamp (7).

4. Construction toy according to claim 3, the gripping means (18) being arranged on an outer face (11) of a base (9) of the joining clamp (7).

5. Construction toy according to either claim 3 or claim 4, the gripping means (18) being formed by nubs (19).

6. Construction toy according to either claim 3 or claim 4, the gripping means (18) being formed by a lug (19).

7. Construction toy according to any of claims 1 to 6, the joining device (1) consisting of a single joining clamp (7).

8. Construction toy according to any of claims 1 to 6, the joining device (1) comprising two joining clamps (7) connected by a connecting tab (15).

9. Construction toy according to claim 8, the joining device (1) being formed by the two joining clamps (7) and by the connecting tab (15).

10. Construction toy according to either claim 8 or claim 9, each joining clamp (7) comprising a base (9) which connects the two side arms (8), the connecting tab (15) connecting the two joining clamps (7) either by the bases (9) thereof, or by the side arms (8) thereof, or by the base (9) of one joining clamp (7) and the side arm (8) of another joining clamp (7).

11. Construction toy according to any of claims 1 to 10, the joining device (1) comprising a magnet (16).

12. Construction toy according to any of claims 1 to 11, a partial bevel (17) being produced on the internal face 10 of the free end of each side arm (8) to facilitate the joining of the caps (2).
